# EUROPEAN PATENT APPLICATION

(11) **EP 1 406 264 A2**
(43) Date of publication of application: **07.04.2004**
(21) Application number: 03021649.3
(22) Date of filing: 26.09.2003
(51) Int. Cl.: G11B 33/02, G11B 33/10

(54) **Information processing apparatus with transferable display device on front thereof**

(30) Priority: 30.09.2002 JP 2002287326
(71) Applicant: Pioneer Corporation, Tokyo-to (JP)
(72) Inventor: Ogasawara, Masakazu, Tsurugashima-shi Saitama-ken (JP)
(74) Representative: Klingseisen, Franz, Dipl.-Ing.

(57) **Abstract**

There is provided an information processing apparatus (1, 50, 60) with a display device placed on a front thereof in a transferable manner. In the apparatus, pluralities of openings (3, 8) are formed to allow an information recording medium to pass through each of the openings. The apparatus comprises a display device (5) and a transfer unit (6, 40, 41, 42, 30, 32). The display device displays an operation state of the information processing apparatus and to be transferable in front of the plurality of openings. The transfer unit is configured to control the display device so that the display device is transferred to a position at which the display device masks, of the plurality of openings, another opening other than a particular opening through which an information recording medium in operation is allowed to pass.

## Description

### TECHNICAL FIELD OF THE INVENTION

The present invention relates to an information processing apparatus for processing bits of information recorded on an information recording medium that has been loaded, a method of controlling a location of a display device provided on the information processing apparatus, a program for controlling the location of the display device, and an information .recording medium on which programs for controlling the location of the display device as well as predetermined information processing are written.

### BACKGROUND OF THE INVENTION

Recently, an optical disk has been generally used as a recording medium of a higher recording capability. However, at present, how to record bits of data on recording mediums are yet to be unified to a particular standard. Hence there are provided a variety of types of standards, such as CD (Compact Disc), DVD (Digital Versatile Disc), and optical disk of higher memory density which uses a blue-violet laser, which has been putting to practical use.

Thus, when it is desired that a plurality of types of optical disks different from each other in the recording mode are reproduced by a signal reproduction apparatus, it is required that the reproduction apparatus be provided with a plurality of reproduction systems (such as optical disk drives) which are compliance with the standards for the optical disks. The number of reproduction systems is therefore proportional to the number of types of optical disks to be reproduced.

Meanwhile, even when the single reproduction apparatus is configured to cope with various types of optical disks recorded in compliance with different recording modes, it is normal that a single display (such as liquid crystal display) is used alone to provide information about how individual optical disks operate at present. Such information about the operation includes the type of each optical disk as well.

In the case of the foregoing conventional reproduction apparatus, openings, through each of which an optical disk is loaded into each reproduction system (i.e., drive), should be formed on the front of the reproduction apparatus in a one-to-one correspondence to the reproduction systems. Nevertheless, only a single display device is used to display the operation state of each optical disk. Thus there is a problem that, in cases where a plurality of types of optical disks are subjected to reproduction at the same time, it is sometimes difficult to recognize, at a glance, that the display device shows the operation state of which optical disk.

### SUMMARY OF THE INVENTION

The present invention has been made in view of the above circumstances, and an exemplified object of the present invention is therefore to make it possible that, even when plural types of optical disks are under reproduction carried out at the same time, information about an operation state displayed on the display device and a particular optical disk of which operation state is currently on the display device can easily be related to each other for recognizing the operation state of the particular optical disk.

In order to realize the above object, as one aspect, the present invention provides an information processing apparatus in which pluralities of openings are formed to allow an information recording medium to pass through each of the openings, the apparatus comprising: a display device configured to display an operation state of the information processing apparatus and to be transferable in front of the plurality of openings; and a transfer unit configured to control the display device so that the display device is transferred to a position at which the display device masks, of the plurality of openings, another opening other than a particular opening through which an information recording medium in operation is allowed to pass.

As another aspect of the present invention, there is provided a method of controlling a transfer of a display device equipped on an information processing apparatus in which a plurality of openings are formed to allow a recording medium to pass through each opening when being loaded or unloaded into or from the information processing apparatus, information indicative of an operation state of the information processing apparatus being provided by the display device, the method comprising the steps of: detecting information showing that an information medium in operation is loaded through which opening; detecting a current location of the display device; and controlling, based on the detected information and the detected current location, the display device so that the display device is transferred to a position at which the display device masks, of the plurality of openings, another opening other than a particular opening through which an information recording medium in operation is allowed to pass.

As further aspect of the present invention, the present invention provides an information processing program readable by a computer incorporated in an information processing apparatus in which a plurality of openings are formed to allow a recording medium to pass through each opening when being loaded or unloaded into or from the information processing apparatus, information indicative of an operation state of the information processing apparatus being provided by a display device, wherein the program makes the computer have a function of controlling the display device so that the display device is transferred to a position at which the display device masks, of the plurality of openings, another opening other than a particular opening through which an information recording medium in operation is allowed to pass.

As further aspect of the present invention, the present invention provides an information recording medium in which a computer-readable program is recorded, the program being readable by a computer incorporated in an information processing apparatus in which a plurality of openings are formed to allow a recording medium to pass through each opening when being loaded or unloaded into or from the information processing apparatus, information indicative of an operation state of the information processing apparatus being provided by a display device, wherein the program makes the computer have a function of controlling the display device so that the display device is transferred to a position at which the display device masks, of the plurality of openings, another opening other than a particular opening through which an information recording medium in operation is allowed to pass.

### BRIEF DESCRIPTION OF THE DRAWINGS

Other objects and aspects of the present invention will become apparent from the following description and embodiments with reference to the accompanying drawings in which:
Fig. 1A shows, as a perspective view, a first operation state of an information recording and reproducing apparatus according to a first embodiment of the present invention;
Fig. 1B shows, as another perspective view, a second operation state of the information recording and reproducing apparatus according to the first embodiment;
Fig. 1C shows, as another perspective view, a third operation state of the information recording and reproducing apparatus according to the first embodiment;
Fig. 1D shows, as another perspective view, a fourth operation state of the information recording and reproducing apparatus according to the first embodiment;
Fig. 2 is an outlined side view of a drive unit employed in the first embodiment;
Fig. 3A shows, as a side view, a first driven state of the drive unit according to the first embodiment;
Fig. 3B shows, as another side view, a second driven state of the drive unit according to the first embodiment;
Fig. 3C shows, as another side view, a third driven state of the drive unit according to the first embodiment;
Fig. 4 is a block diagram showing an outlined electric configuration of the drive unit according to the first embodiment;
Fig. 5 is a flowchart showing the operation of the drive unit according to the first embodiment;
Fig. 6A shows, as a side view, a first driven state of a drive unit employed in a modification of the first embodiment;
Fig. 6B shows, as another side view, a second driven state of the drive unit employed in the modification of the first embodiment;
Fig. 6C shows, as another side view, a third driven state of the drive unit employed in the modification of the first embodiment;
Fig. 7 is a perspective view of an information recording and reproducing apparatus according to a second embodiment of the present invention, the apparatus being in operation;
Fig. 8 is an outlined side view of a drive unit employed in the second embodiment;
Fig. 9A shows, as a side view, a first driven state of the drive unit according to the second embodiment;
Fig. 9B shows, as another side view, a second driven state of the drive unit according to the second as embodiment;
Fig. 9C shows, as another side view, a third driven state of the drive unit according to the second embodiment;
Fig. 10 is a block diagram showing an outlined electric configuration of the drive unit according to the second embodiment;
Fig. 11 is a flowchart explaining the operation of the drive unit according to the second embodiment;
Fig. 12A shows, as a perspective view, a first operation state of an information recording and reproducing apparatus according to a modification of the second embodiment;
Fig. 12B shows, as another perspective view, a second operation state of the information recording and reproducing apparatus according to the modification of the second embodiment;
Fig. 12C shows, as another perspective view, a third operation state of the information recording and reproducing apparatus according to the modification of the second embodiment; and
Fig. 12D shows, as another perspective view, a fourth operation state of the information recording and reproducing apparatus according to the modification of the second embodiment.

### DETAILED DESCRIPTION OF THE PREFERRED EMBODIMENTS

Preferred embodiments of the present invention will now be described with reference to the accompanying drawings.

In the following embodiments, an information recording/reproducing apparatus to which the present invention is applied is described. That is, each embodiment exemplifies an information recording/ reproducing apparatus for recording or reproducing bits of information onto or from two kinds of optical disks which cannot be driven by a single drive, because the disks are formed in compliance with different types of standards.

### (First embodiment)

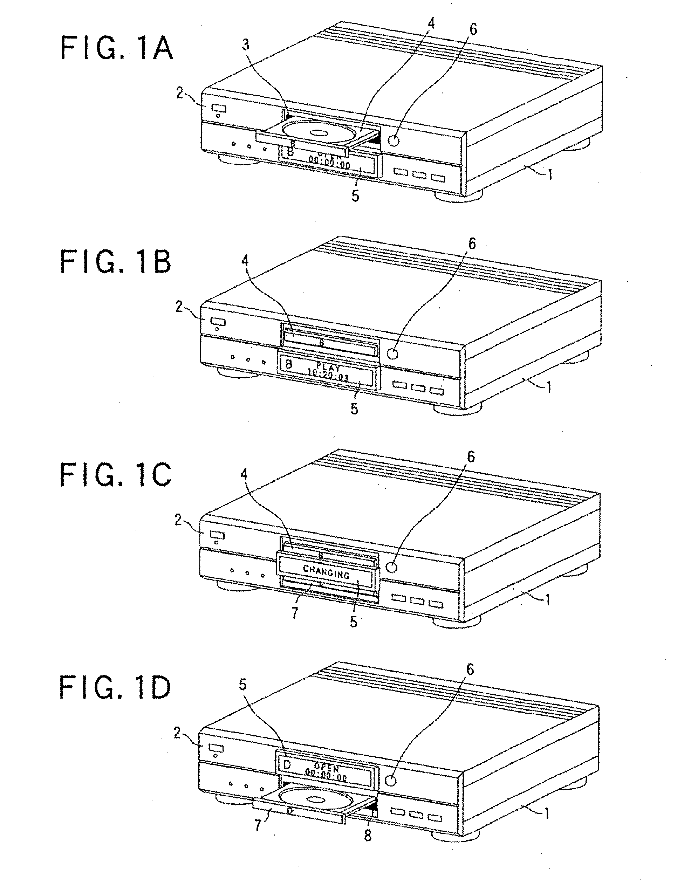

First, referring to Figs. 1A to 1D, the appearance of an information recording and reproducing apparatus according to a first embodiment will now be described, together with changes in the appearance that can be established by a display device driving mechanism.

Figs. 1A to 1D are perspective views showing driven states of a display device placed on the information recording and reproducing apparatus, in which the display device is driven by the display device driving mechanism.

An information recording and reproducing apparatus 1 according to the first embodiment has a front panel 2. At predetermined positions of the front panel 2, two openings are formed to allow optical disks to be loaded into two drives through the openings, respectively. The two drives, which consist of D and B drives, are formed in compliance with two types of different optical disks and placed independently within the apparatus. An optical disk is laid on a disk tray composing part of the D drive, and then pulled, as the disk is laid thereon, into the D drive body through one of the two openings. In the same way, another optical disk is laid on a disk tray composing part of the B drive, and then pulled, as the disk is laid thereon, into the B drive body through the other opening. The optical disks, which are loaded individually into the D and B drives, are rotated for reproducing or recording bits of information.

Fig. 1A depicts one state of the two drives incorporated in the information recording and reproducing apparatus 1, in which the B drive is driven such that a disk tray 4, which composes part of the B drive, is pulled out forward for accepting an optical disk thereon.

To be specific, in the front panel 2 of the information recording and reproducing apparatus 1, an opening 3 are formed, through which the disk tray 4 with an optical disk (not shown) placed thereon can be passed. The information recording and reproducing apparatus 1 has also a display device 5 which serves as display means for providing an operation state of the apparatus 1. This display device 5 is formed to have a size fitting to each opening. In the situation shown in Fig. 1A, the display device 5, which has been transferred from other positions, is located at a position of the opening for the D drive so that the opening is masked, during which time the display 5 shows that the B drive is in operation at present.

In addition, on the front panel 2, a drive selecting switch 6 is disposed, which can be used for selecting, from the D and B drives, either one drive to be driven.

When an optical disk in compliance with the standard for the B drive on the disk tray 4, the disk tray 4 is driven to be pulled into the information recording and reproducing apparatus 1, as shown in Fig. 1B, while the optical disks is kept on the disk tray 4. As a result, the optical disk is loaded into the B drive. Then the optical disk is subjected to recording or reproducing information onto or from the optical disk laid on the disk tray in the B drive. In this situation, as shown in Fig. 1B, an operation state of the optical disk loaded in the B drive is displayed on the display device 5.

A transfer from the driven state of the B drive, which is shown in Figs. 1A and 1B, to a driven state of the D drive will now be explained in connection with Figs. 1C and 1D.

A transfer from the driven state of the B drive shown in Fig. 1B to a driven state of the D drive is triggered by a manual operation at the drive selecting switch 6 on the front panel 2. This manual operation is carried out when the B drive is in operation as shown in Fig. 1B. In response to the manual operation, the display device 5, which has been located at the position lower than the upper opening 3 so far, is driven to move upward along the front panel 2, as shown in Fig. 1 C. During an upward transfer of the display device 5, the display device 5 provides a display state showing that the drives are under switching operation.

When the display device 5 finally arrives at a predetermined upper position of the upper opening 3 as shown in Fig.1D (so that the upper opening 3 is masked by the display device 5), a lower opening 8 for the D drive appears at its lower predetermined position. Through this lower opening 8, a disk tray 7 for the D drive is exposed to the external field, whereby the D drive becomes available. Hence, the disk tray 7 is pulled out forward to lay an optical disk in compliance with the standard for the D drive. This enables the optical disk to be loaded into the D drive.

That is, the optical disk placed on the disk tray 7 is then driven to be pulled back into the D drive, whereby the optical disk can be loaded into the D drive. Hence, it is possible that the optical disk is subjected to recording and reproducing bits of information.

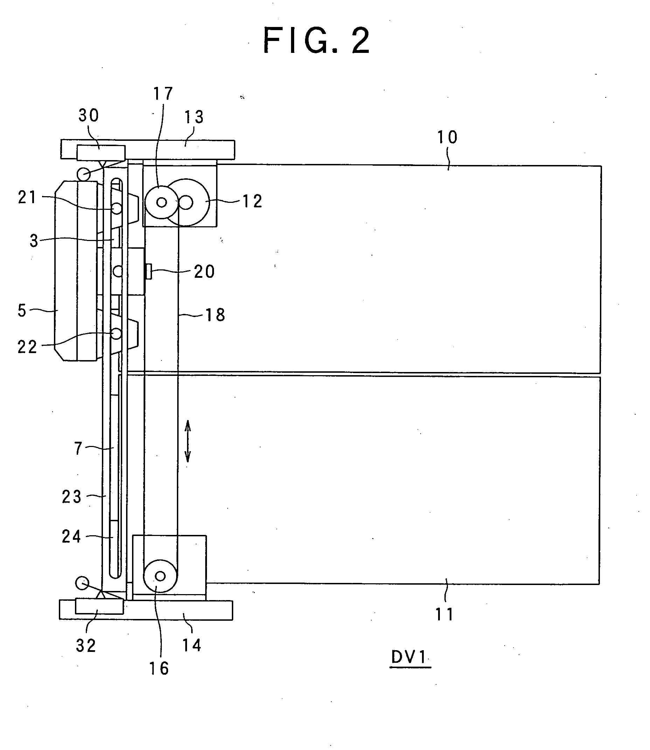

Referring to Fig. 2, a transfer mechanism for transferring the display device 5 as shown in Figs. 1A to 1D will now be described.

Fig. 2 shows a side view of a drive unit DV1 which has been taken out of the information recording and reproducing apparatus 1, the drive unit DCV1 being provided with the transfer mechanism, display unit 5, B drive and D drive.

As shown in Fig. 2, the drive unit DV1 includes a B drive 10 and a D drive 11 which are superposed one on the other in the upper and lower direction and secured by an upper frame 13 and a lower frame 14, respectively. On the frontal surfaces of the B drive 10 and the D drive 11, the disk trays 3 and 7 are exposed in part to the external field. In addition, guides 23 for the display unit 5 are disposed on the frontal both sides of the B and D drives so as to connect the upper and lower frames 13 and 14. The guides 23 are thus able to move up or down in Fig. 2. Incidentally, Fig. 2 shows only one of both the guides 23 disposed on both the longitudinal sides of the drives.

Rod-like supports 21 and 22 both firmly coupled with the display device 5 are fit, but movable, into the slits 24 formed in the guides 23, respectively. Hence the display device is supported in front of both the B and D drives 10 and 11 and can be driven to transfer in the up and down direction.

Furthermore, a fitting member 20 is secured on the display device 5. Pulleys 17 and 16 are rotatably arranged on the upper and lower frames 13 and 14, respectively. A timing belt 18 is bridged over both the pulleys 17 and 16.

On this timing belt 18 is secured the fitting member 20. Thus when the pulley 17, serving as transfer means, is driven by an electric motor 12, the timing belt 18 can rotated to circulate between the pulleys 17 and 16. This circulation provides upward and downward transfers of the belt 18, as shown by arrows in Fig. 2. These transfers of the belt 8 enable the display device 5 to transfer in the up and down direction in Fig. 2 along the frontal surfaces of the B and D drives.

A switch 30 is secured on the upper frame 13 so as to detect an upward transfer of the display device 5. When the display device 5 is made to transfer upward in Fig. 2 and comes in contact with its switching segment, the switch 30 is turned on, and then outputs a switch signal showing the "on" state.

In the similar way to the above, a witch 32 is secured on the lower frame 14 so as to detect a downward transfer of the display device 5. When the display device 5 is made to transfer downward in Fig. 2 and comes in contact with its switching segment, the switch 32 is turned on, and then outputs a switch signal showing the "on" state.

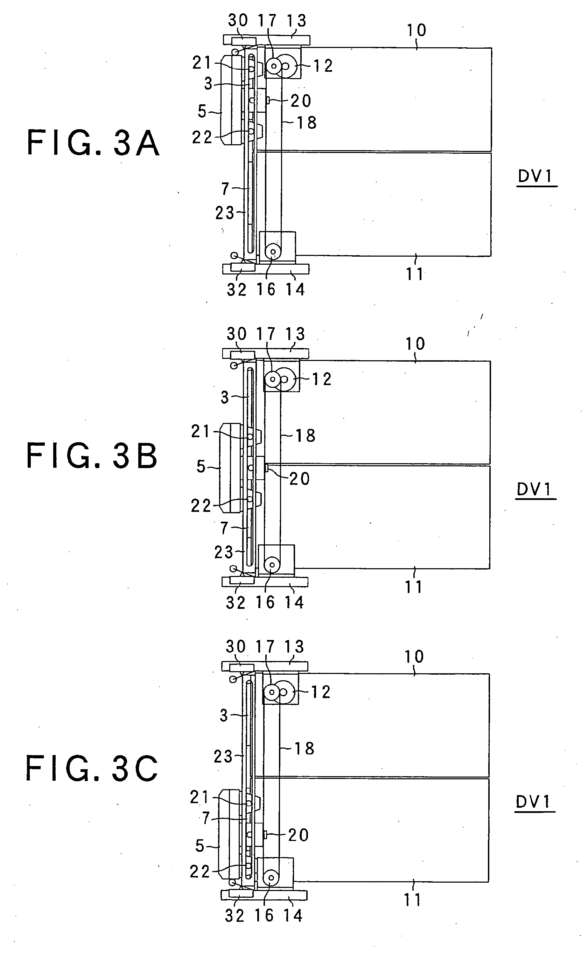

Referring to Figs. 3A to 3C, various transfer modes of the display device 5, which are realized by the foregoing drive unit DV1, will now be described together with transfer control.

Figs. 3A to 3C show side views of the drive unit DV1, which are depicted to explain various transfer positions of the display device 5.

First, as shown in Fig. 3A, in the case that the display device 5 is located at the top position along the guides 23 (that is, the D drive 11 is currently in operation (hereinafter referred to as "D mode")), the upper edge of the display device 5 comes in touch with the switching segment of the upper switch 30. This enables the upper switch 30 to continue outputting a switch signal indicating that the display unit 5 is currently located at the top position along the guides 23. By contrast, the switching segment of the lower switch 32 is made open, so that no signal is provided from this lower switch 32.

A later-described CPU control issues a command to transfer the display device 5 downward in Fig. 3A, and this command is sent to the motor 12. In response to the reception of this command, the motor 12 is driven to rotate one (17) of the pulleys 16 and 17. This drive causes the timing belt 18 to rotate counterclockwise, so that the display device 5, which is secured on the timing belt by the fitting member 20, is made to transfer downward along the guides 23, as shown from Fig. 3A to Fig. 3B.

When the display device 5 reaches the bottom position along the guides 23 (refer to Fig. 3C), the lower edge of this display device 5 is forced to come in touch with a switching segment of the lower switch 32. This permits the switch 32 to output a switch signal indicating that the display device 5 has arrived at the bottom position along the guides 23.

Accordingly, as shown in Fig. 3C, in cases where the display device 5 is located at the bottom position along the guides 23 (that is, the B drive 10 is now brought into operation (hereinafter referred to as "B mode")), the lower edge of the display device 5 comes in touch with the switching segment of the upper switch 32. This enables the lower switch 32 to continue outputting a switch signal indicating that the display unit 5 is currently located at the bottom position along the guides 23. By contrast, the switching segment of the upper switch 30 is made open, so that no signal is provided from this upper switch 30.

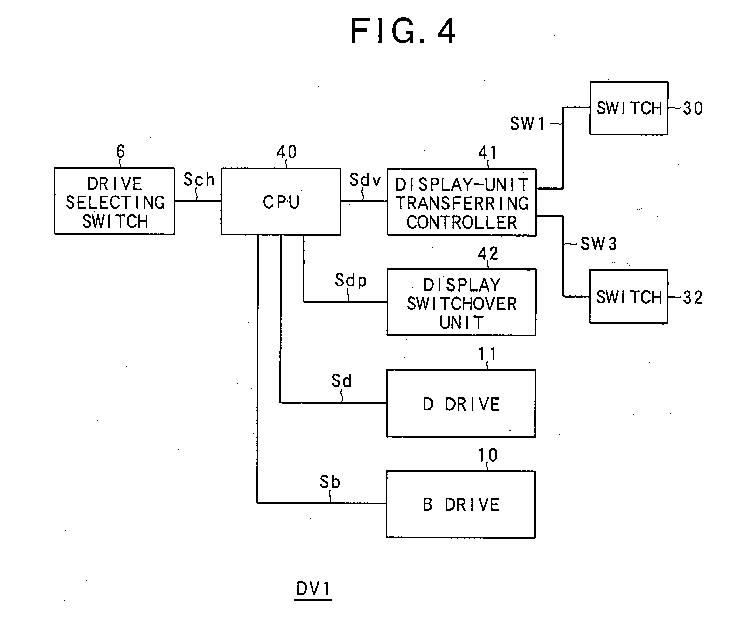

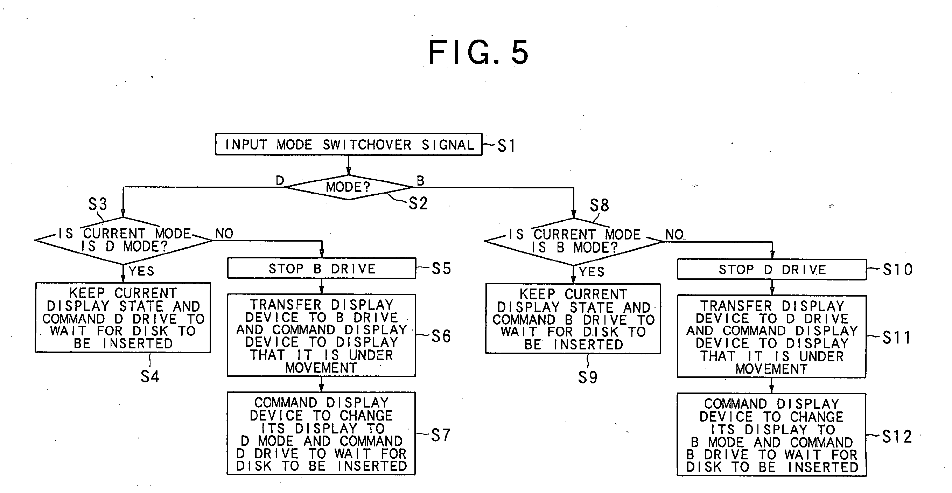

Referring to Figs. 4 and 5, the configuration for controlling transfers of the display device 5, which is carried out under the mechanism explained above in Figs. 2 and 3A to 3C, will now be described.

Fig. 4 is a block diagram showing the configuration of the drive unit DV1 prepared for performing the transfer control, while Fig. 5 shows a flowchart for the transfer control.

As shown in Fig. 4, the transfer control requires, in addition to the foregoing drive selecting switch 6, B drive 10, and D drive 11, a CPU 40, a display-device transferring controller 41 connected to the switches 30 and 32, and a display switchover unit 42 to switch displayed contents on the display device 5.

The operation of the transfer control configuration shown above will now be described.

In this transfer control, the drive selecting switch 6 on the front panel 2 is operated to output a switchover signal Sch serving as a trigger (step S1 in Fig. 5). Responsively to this trigger, the CPU 40 examines the switchover signal Sch to determine whether or not either the D mode or the B mode should be active in operating the information recording and reproducing apparatus (step S2 in Fig. 5).

When the switchover signal Sch reveals that a mode to be operated is the D mode (D at step S2), it is determined through the display-device transferring controller 41 whether or not either the switch signal SW1 or SW3 is outputted form either the switch 30 or 32. That is, it is determined if the current operation state of the information recording and reproducing apparatus 1 is based on the D mode (step S3). If it is found that the apparatus 1 is in operation in the D mode (i.e., the switch signal SW1 is outputted from the upper switch 30; YES at step S3), the control will not be carried out for transfers of the display device 5, with the control brought into a waiting state, because there is no need for transferring the display device 5 (step S4).

By contrast, when the determination at step S3 shows that the information recording and reproducing apparatus 1 is now in operation in the B mode (i.e., the switch signal SW3 is outputted from the lower switch 32; NO at step S3), it is required that an operation carried out at the drive selecting switch 6 be reflected in the transfer control. That is, the current B mode should be changed to the D mode. Hence a control signal Sb to stop the B drive 10 is first sent to the B drive 10 (step S5), and then the display device 5 is made to transfer toward the B drive 10 in such a manner as shown in Figs. 3A to 3C (step S6). During this transfer, the CPU 40 outputs a control signal Sdp to the display switchover unit 42 to indicate that the display device 5 is now in transfer (refer to Fig. 1 C) .

Then, when it is confirmed based on the switch signal SW 1 from the upper switch 30 that the display device 5 has reached the top position along the guides 23, recognition is made such that a necessary transfer of the display device 5 has been completed. In this case, the displayed content on the display device 5 is switched to the D mode and a control signal Sd is outputted to the D drive 11 so that the D drive is brought into a waiting state (step S7).

On the other hand, when the switchover signal Sch reveals at step S2 that a mode to be operated is the B mode (B at step S2), it is determined through the display-device transferring controller 41 whether or not either the switch signal SW1 or SW3 is outputted form either the switch 30 or 32. That is, it is determined if the current operation state of the information recording and reproducing apparatus 1 is based on the B mode (step S8). If it is found that the apparatus 1 is in operation in the B mode (i.e., the switch signal SW3 is outputted from the lower switch 32; YES at step S8), the control will not be carried out for transfers of the display device 5, with the control brought into a waiting state, because there is no need for transferring the display device 5 (step S9).

By contrast, when the determination at step S8 shows that the information recording and reproducing apparatus 1 is now in operation in the D mode (i.e., the switch signal SW1 is outputted from the upper switch 30; NO at step S8), it is required that an operation carried out at the drive selecting switch 6 be reflected in the transfer control. That is, the current D mode should be changed to the B mode. Hence a control signal Sb to stop the D drive 10 is first sent to the D drive 11 (step S10), and then the display device 5 is made to transfer toward the D drive 11 in such a manner as shown in Figs. 3A to 3C (step S11). During this transfer, the CPU 40 outputs a control signal Sdp to the display switchover unit 42 to indicate that the display device 5 is now in transfer (refer to Fig. 1 C) .

Then, when it is confirmed based on the switch signal SW3 from the lower switch 32 that the display device 5 has reached the bottom position along the guides 23, recognition is made such that a necessary transfer of the display device 5 has been completed. In this case, the displayed content on the display device 5 is switched to the B mode and a control signal Sd is outputted to the B drive 10 so that the B drive is brought into a waiting state (step S7).

Accordingly, the drive unit DV1 according to the first embodiment is incorporated in the information recording and reproducing apparatus having two openings 3 and 8 through each of which an optical disk can be passed for loading or unloading. This apparatus has the display device 5 to display an operation state of the drive unit DV1. The drive unit DV1 has two drives correspondingly to the individual openings 3 and 8. When either one drive 3 or 8 is in operation, the display device 5 is made to transfer to a position in front of a remaining opening other than the opening 3 or 8 through which the optical disk is made to pass. That is, the remaining opening 8 or 3, which is located in front of the opening to the drive which is not in operation, is masked by the display device 5. Hence, a design of the front of the apparatus can be sophisticated. In addition, it is possible for users to quickly recognize which drive is in operation at present.

Further, the display device 5 provides information about an operation state of an optical disk loaded in either drive that has been used, but is located to mask either opening which is not used for loading or unloading an optical disk. Both of a displayed content on the display device 5 and an optical disk corresponding to the displayed content can easily be related to each other.

### (Modifications)

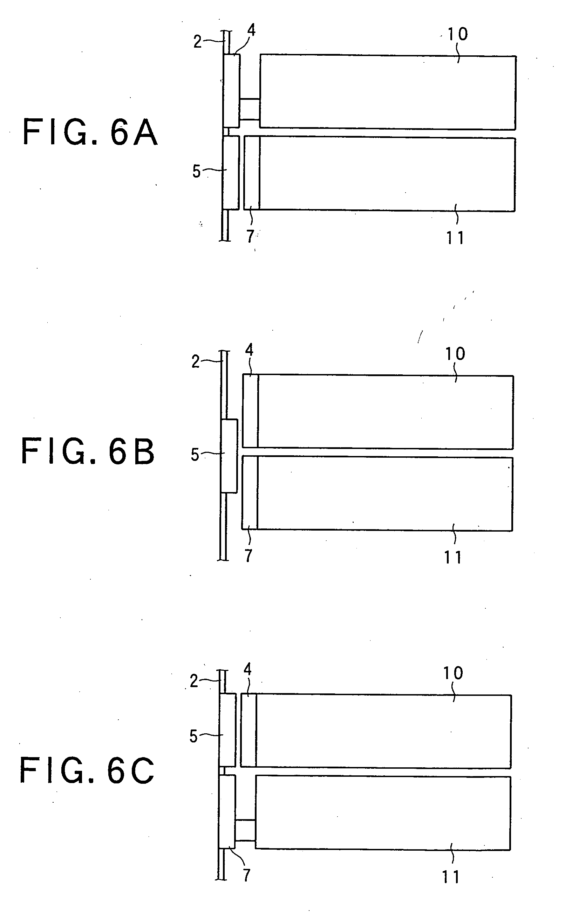

Incidentally, the foregoing first embodiment can be modified as shown in Figs. 6A to 6C. As shown in Fig. 6A, in cases where the display device 5 is currently located in front of the D drive 11 and the B-mode drive is not in operation (refer to Fig. 6A), the B-mode-drive disk tray 4 on which an optical disk is laid but is not in operation is allowed to advance forward to form a frontal plane equal to the display device 5. This will give more sophisticated design to the front of the apparatus.

When the display device 5 is made to transfer from the location shown in Fig. 6A, the disk tray 4 that has advanced is pulled back, before the display device 5 is moved (refer to Fig. 6B). If the display device 5 has already been transferred but the D drive 11 is yet to be operated (refer to Fig. 6C), the D-mode-drive disk tray 7 can be made to advance forward, like the above, so as to form a frontal plane equal to the display device 5.

### (Second embodiment)

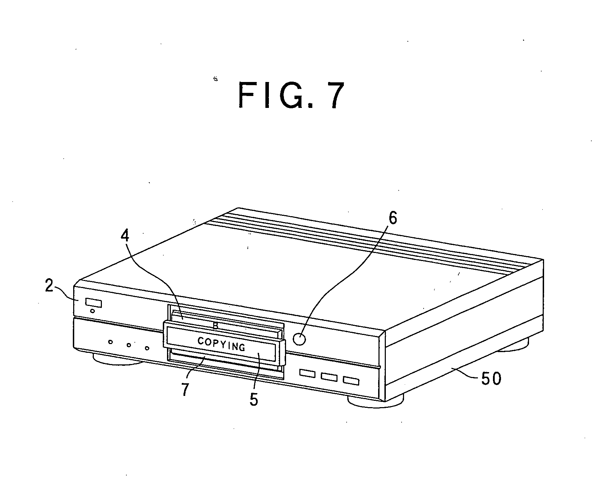

Referring to Figs. 7 to 11, an information recording and reproducing apparatus according to a second embodiment of the present invention will now be described. In Fig. 7, the similar or identical components to those shown by the information recording and reproducing apparatus 1 according to the first embodiment are explained with the same references for the sake of avoiding a redundant explanation.

Fig. 7 is a perspective view of an information recording and reproducing apparatus 50 according to the second embodiment, the apparatus 50 having a display-device driving mechanism for driving the display device 5. In Fig. 7, the display device 5 is shown so that it is located at a certain driven position.

In the first embodiment, the display device 5 has been described such that the display 5 is able to transfer in a simple reciprocating manner between the two positions located in front of the B and D drives 10 and 11. By contrast, in the information recording and reproducing apparatus 50 according to the second embodiment, the display-device driving mechanism is configured so that, in addition to the foregoing reciprocating movements, the display device 5 can be stopped at a middle position between the two locations in front of the B and D drives 10 and 11, as shown in Fig. 7. Such a stop at the middle position becomes required when two optical disks in compliance with the individual standards are simultaneously in operation in both the D drive 11 and the B drive 10. For example, such a situation arises when bits of information on an optical disk loaded into the D drive 11 is copied to an optical disk loaded into the B drive 10. This second embodiment is not limited to such a stop, but the display device 5 under the stop at the middle position provides display indicating that, for example, it is now under copy of information.

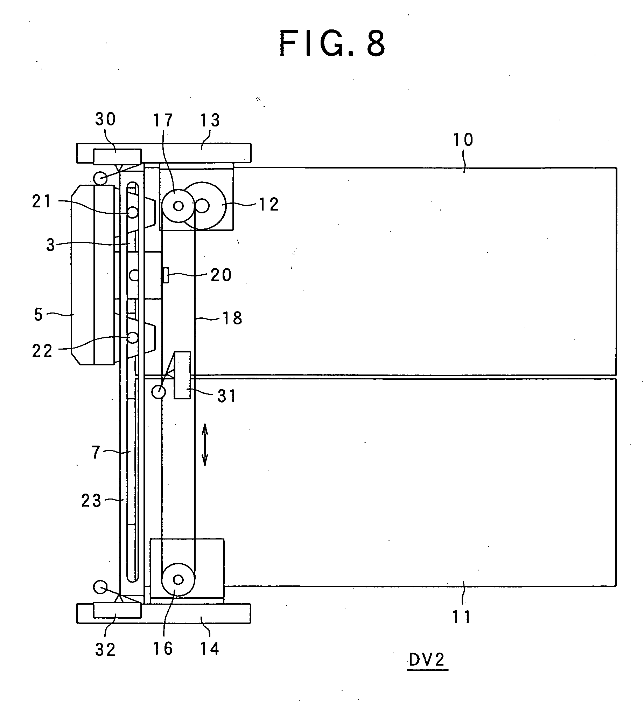

A transfer mechanism for transfer and stopping the display device 5 will now be described with reference to Fig. 8. This transfer mechanism is able to operate as explained in the first embodiment, as a mater of course. In Fig. 8, the similar or identical components to those of the drive unit DV1 explained in the first embodiment are explained by the same references and omitted from being detailed.

Fig. 8 is a side view a drive unit DV2 containing the transfer mechanism, display device 5, B drive 10, and D drive 11, the drive unit DV2 being shown by being removed from the information recording and reproducing apparatus according to the second embodiment.

As shown in Fig. 8, in addition to the B drive 10, D drive 11, upper frame 13, lower frame 14, guides 23 including the slits 24 formed therethrough, display device 5 including the supports 21 and 22 and the fitting member 20, pulleys 17 and 16, timing belt 18, motor 12, and switches 30 and 32, which are all provided by the drive unit DV1 according to the first embodiment, the drive unit DV2 comprises a switch 31 placed at a middle between the B and D drives 10 and 11 so as to contact the fitting member 20 under a transfer. This switch 31 is configured to turn on when the display device 5 moves up or down at the middle position between the B and D drive 10 and 11 and supplies a switch signal indicating that the switch 31 has been turned on.

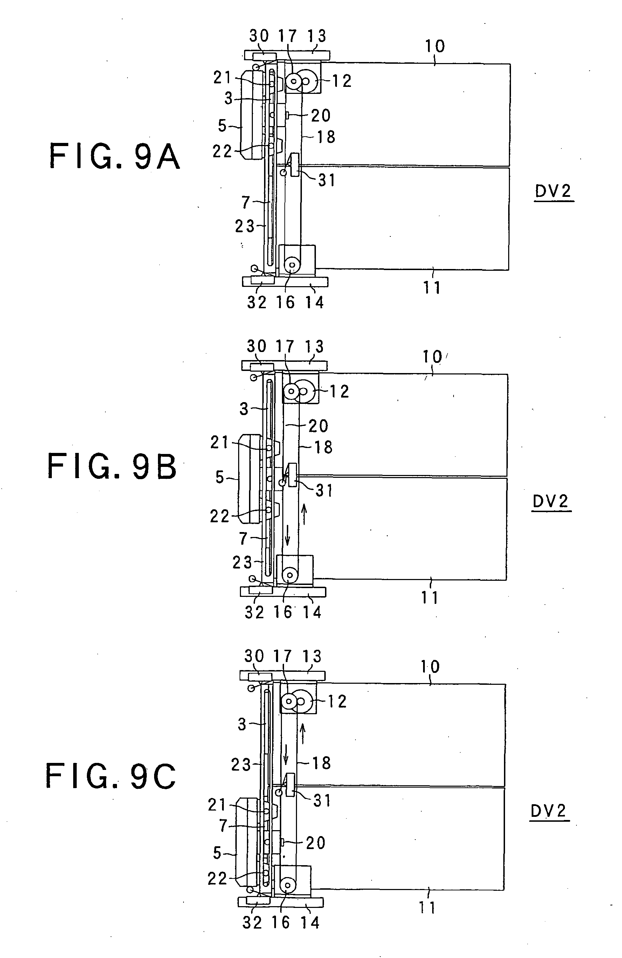

Referring to Figs. 9A to 9C, transfer modes and transfer control of the display device 5 driven by the foregoing transfer mechanism incorporated in the drive unit DV2 will now be detailed.

Figs. 9A to 9C are side views of the drive unit DV2, each showing a transfer step of the display device 5.

First, as shown in Fig. 9A, in the case that the display device 5 is located at the top position along the guides 23 (that is, the "D mode" is currently in operation), the upper switch 30 continues outputting a switch signal indicating that the display unit 5 is currently located at the top position along the guides 23, like the foregoing embodiment.

A later-described CPU control issues a command to transfer the display device 5 downward in Fig. 9A, the command being for copying bits of information between optical disks loaded in the information recording and reproducing apparatus 50, and this command is sent to the motor 12. In response to the reception of this command, the motor 12 is driven to rotate one (17) of the pulleys 16 and 17. This drive causes the timing belt 18 to rotate counterclockwise, so that the display device 5, which is secured on the timing belt 18 by the fitting member 20, is made to transfer downward along the guides 23, as shown from Fig. 9A to Fig. 9B. This downward transfer is made so that the display device 5 is lowered down to a middle position between the B and D drives 10 and 11.

When the display device 5 reaches the middle position (refer to Fig. 9B), the fitting member 20 connected to this display device 5 is forced to come in touch with a switching segment of the switch 31. This permits the switch 31 to output a switch signal indicating that the display device 5 has arrived at the middle position.

Then another later-described CPU control issues another command to give a further downward transfer to the display device 5, and this command is also sent to the motor 12. In response to the reception of this command, the motor 12 is driven to rotate the pulley 17. This drive also causes the timing belt 18 to rotate counterclockwise, so that the display device 5 is forced to transfer downward along the guides 23, as shown from Fig. 9B to Fig. 9C.

When the display device 5 reaches the bottom position along the guides 23 (refer to Fig. 9C), the lower edge of this display device 5 is forced to come in touch with a switching segment of the lower switch 32. This permits the switch 32 to output a switch signal indicating that the display device 5 has arrived at the bottom position along the guides 23.

Accordingly, as shown in Fig. 9C, in cases where the display device 5 is located at the bottom position along the guides 23 (that is, the "B mode" has now been brought into operation), the lower edge of the display device 5 comes in touch with the switching segment of the upper switch 32. This enables the lower switch 32 to continue outputting a switch signal indicating that the display unit 5 is currently located at the bottom position along the guides 23. By contrast, the switching segment of the upper switch 30 is made open, so that no signal is provided from this upper switch 30.

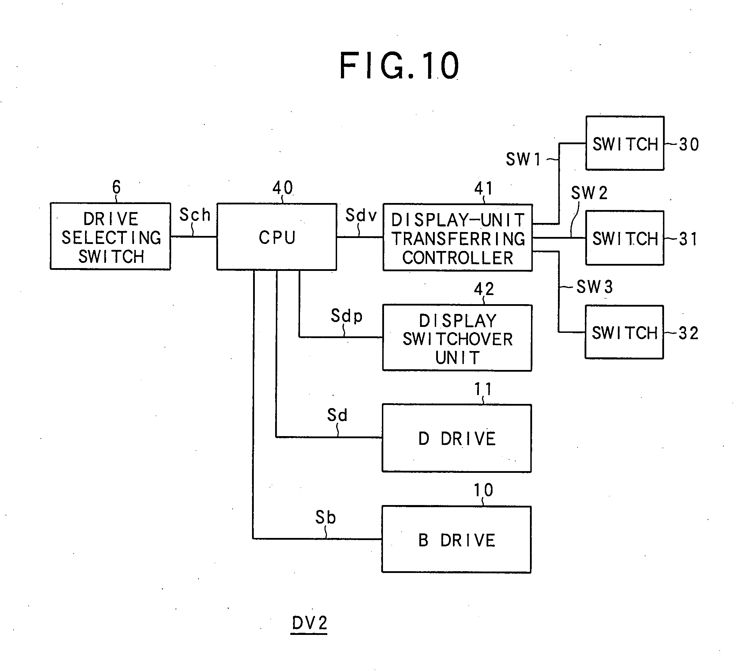

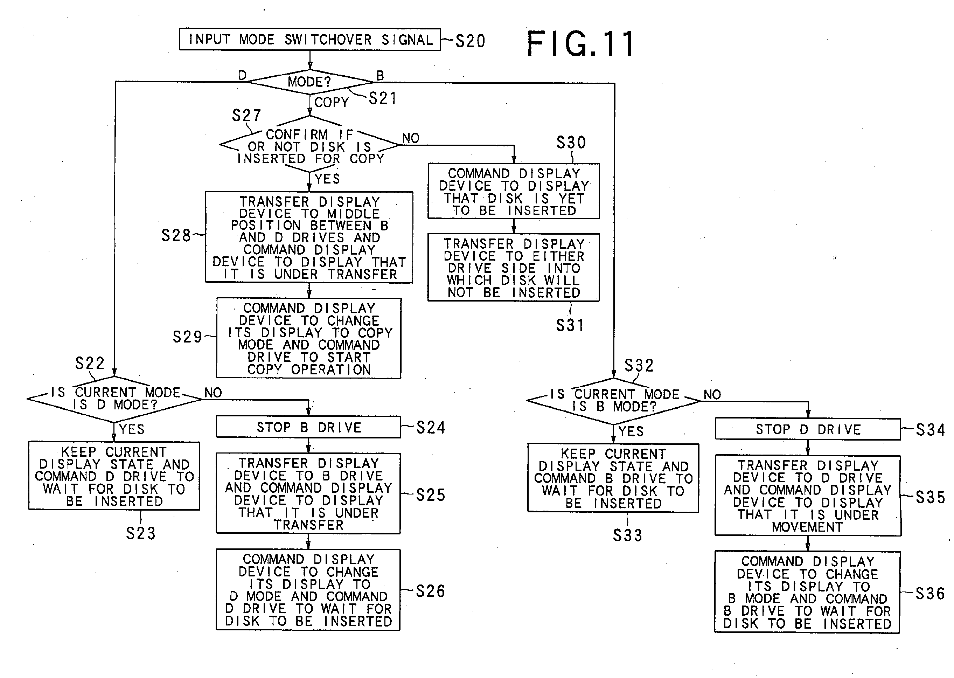

Referring to Figs. 10 and 11, the configuration for controlling transfers of the display device 5, which is carried out under the mechanism explained above in Figs. 8 and 9A to 9C, will now be described.

Fig. 10 is a block diagram showing the configuration of the drive unit DV2 prepared for performing the transfer control, while Fig. 11 shows a flowchart for the transfer control.

As shown in Fig. 10, in addition to the configuration of the drive unit DV1 according to the first embodiment, the switch 31 is additionally involved so that the switch signal from the switch 31 is sent to the display-device transferring controller 41.

The operation of the transfer control configuration shown above will now be described.

In this transfer control, the drive selecting switch 6 on the front panel 2 is operated to output a switchover signal Sch serving as a trigger (step S20 in Fig. 11). Responsively to this trigger, the CPU 40 examines the switchover signal Sch to determine that any one of the D mode, the B mode, or a mode under which information is copied from one optical disk to the other optical disk (hereinafter referred to as "copy mode") should be active in operating the information recording and reproducing apparatus 50 (step S21 in Fig. 11).

When the switchover signal Sch reveals that a mode to be operated is the D mode (D at step S21), it is then determined through the display-device transferring controller 41 that any of the switch signals SW1, SW2 and SW3 is outputted form any of the switches 30, 31 and 32. That is, it is determined if or not the current operation state of the information recording and reproducing apparatus 50 is based on the D mode (step S22). If it is found that the apparatus 50 is in operation in the D mode (i.e., the switch signal SW1 is outputted from the upper switch 30; YES at step S22), the control will not be carried out for transfers of the display device 5, with the control brought into a waiting state, because there is no need for transferring the display device 5 (step S23).

By contrast, when the determination at step S22 shows that the information recording and reproducing apparatus 50 is now in operation in the B mode (i.e., the switch signal SW3 is outputted from the lower switch 32; NO at step S22), it is required that an operation carried out at the drive selecting switch 6 be reflected in the transfer control. That is, the current B mode should be changed to the D mode. Hence a control signal Sb to stop the B drive 10 is first sent to the B drive 10 (step S24), and then the display device 5 is made to transfer toward the B drive 10 in such a manner as shown in Figs. 9A to 9C (step S25). During this transfer, the CPU 40 outputs a control signal Sdp to the display switchover unit 42 to indicate that the display device 5 is now in transfer (refer to Fig. 1C).

Then, when it is confirmed based on the switch signal SW 1 from the upper switch 30 that the display device 5 has reached the top position along the guides 23, recognition is made such that a necessary transfer of the display device 5 has been completed. In this case, the displayed content on the display device 5 is switched to the D mode and a control signal Sd is outputted to the D drive 11 so that the D drive is brought into a waiting state (step S26).

On the other hand, at step S21, when the switchover signal Sch reveals that a mode to be operated is the B mode (B at step S21), it is then determined through the display-device transferring controller 41 that any of the switch signals SW1, SW2 and SW3 is outputted form any of the switches 30, 31 and 32. That is, it is determined if or not the current operation state of the information recording and reproducing apparatus 50 is based on the B mode (step S32). If it is found that the apparatus 50 is in operation in the B mode (i.e., the switch signal SW3 is outputted from the lower switch 32; YES at step S32), the control will not be carried out for transfers of the display device 5, with the control brought into a waiting state, because there is no need for transferring the display device 5 (step S33).

By contrast, when the determination at step S32 shows that the information recording and reproducing apparatus 50 is now in operation in the D mode (i.e., the switch signal SW1 is outputted from the upper switch 30; NO at step S32), it is required that an operation carried out at the drive selecting switch 6 be reflected in the transfer control. That is, the current D mode should be changed to the B mode. Hence a control signal Sb to stop the D drive 10 is first sent to the D drive 11 (step S34), and then the display device 5 is made to transfer toward the D drive 11 in such a manner as shown in Figs. 9A to 9C (step S35). During this transfer, the CPU 40 outputs a control signal Sdp to the display switchover unit 42 to indicate that the display device 5 is now in transfer (refer to Fig. 1 C) .

Then, when it is confirmed based on the switch signal SW3 from the lower switch 32 that the display device 5 has reached the bottom position along the guides 23, recognition is made such that a necessary transfer of the display device 5 has been completed. In this case, the displayed content on the display device 5 is switched to the B mode and a control signal Sd is outputted to the B drive 10 so that the B drive is brought into a waiting state (step S36).

Furthermore, in the determination at step S21, when the switchover signal Sch shows that a mode to be operated is the copy mode ("copy" at step S21 in Fig. 11), the processing is given to steps S27 to S31. It is first determined whether or not both the B and D drives 10 and 11 are ready for optical disks for information copy (step S27). If it is found that the optical disks have already been inserted into both the drives 10 and 11 (YES at step S27), the operation mode should be switched to the copy mode in response to an operation carried out at the drive selecting switch 6. In such a case, like the control already shown together with Fig. 9B, the display device 5 is located at the middle position between the B drive 10 and the D drive 11 (step S28). During this transfer, the CPU 40 outputs a control signal Sdp to the display switchover unit 42 to indicate that the display device 5 is now in transfer (refer to Fig. 1C).

When the display device 5 has finally arrived at the middle position, the switch 31 outputs the switch signal SW2 to show the arrival. In response to the output of this signal SW2, it is decided that a transfer necessary for the display device 5 has been completed (refer to Fig. 9B). Thus the display device 5 is controlled to provide another indication that the mode has been brought into the copy mode, and then an actual information-copying operation is started (step 29).

In cases where it is determined at step S27 that the B and D drives 10 and 11 have not ready for optical disks used for information copy (NO at step S27), the display device 5 is subjected to control for providing another indication that the optical disks are yet to be inserted into the drives (step S30). Then, to cope with an optical disk to be inserted from now on, the display device 5 is made to transfer to a position in front of a drive with an optical disk already inserted therein or a drive which will be charged with an optical disk in the next place (step S31). During each transfer of the display device 5, the CPU 40 outputs a control signal Sdp to the display switchover unit 42 to indicate that the display device 5 is now in transfer (refer to Fig. 1C).

Accordingly, in addition to the advantages coming from the operations of the drive unit DV1 according to the first embodiment, the drive unit DV2 of the second embodiment has a further advantage. To be specific, when the optical disks inserted individually into both the drives and driven therein for recording or reproducing bits of information, the display device 5 is located at the middle between both the drives so that each optical disk is prevented from being ejected through each of the openings 3 and 8. Hence it is possible to eliminate the possibility that the optical disks in operation are erroneously ejected.

### (Further modifications)

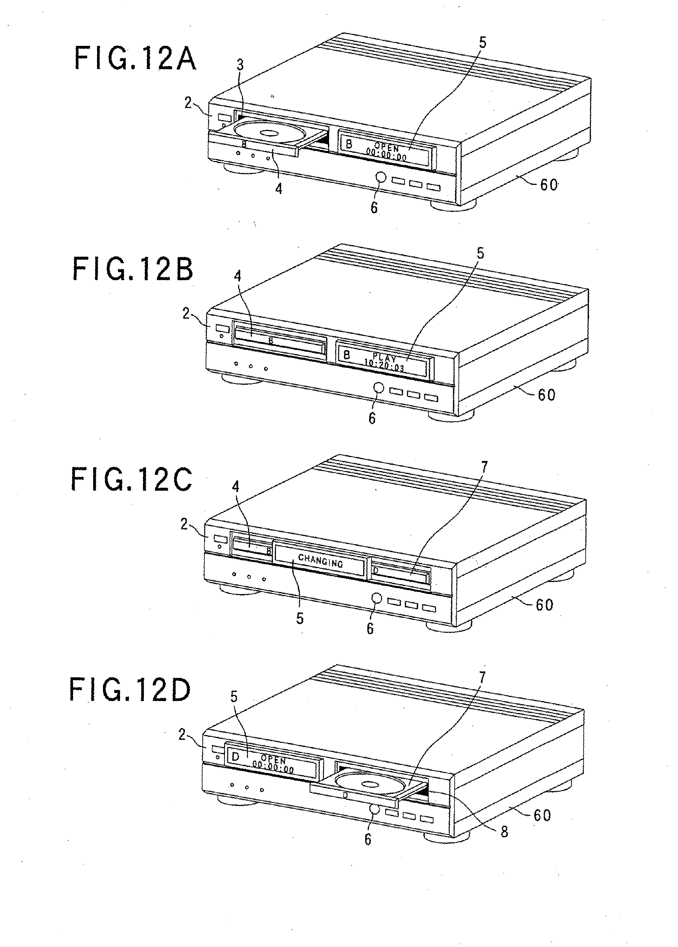

In each embodiment described above, the display device 5 has been described such that the display device 5 is transferred in the up and down direction defined uniquely in the state where the information recording and reproducing apparatus 1 or 50 is actually used. Alternatively, as shown in Figs. 12A to 12D, there can be provided a modification, in which the openings 3 and 8, each of which forms an entrance and exist to and from each of the drives, are formed in line in a lateral direction defined uniquely in the state where an information recording and reproducing apparatus 60 is actually used. In this configuration, the display device 5 is thus configured to transfer in the lateral direction in front of both the openings 3 and 8.

Figs. 12A to 12D details an example of the information recording and reproducing apparatus 60 configured on the basis of the laterally-transferring display device, in which the similar or identical components to those in the first embodiment are denoted by the same references for the sake of a simplified explanation.

Fig. 12A depicts one state of two drives incorporated in the information recording and reproducing apparatus 60, in which the B drive is driven such that a disk tray 4, which composes part of the B drive, is pulled out forward for accepting an optical disk thereon.

In this state, a display device 5 indicates a driven state of the B drive, but is transferred to locate at a position in front of the opening 8 routed to the D drive, so that that the opening 8 is masked by the display device 5.

When an optical disk in compliance with the standard for the B drive on the disk tray 4, the disk tray 4 is driven to be pulled into the information recording and reproducing apparatus 60, as shown in Fig. 12B, while the optical disks is kept on the disk tray 4. As a result, the optical disk is loaded into the B drive. Then the optical disk is subjected to recording or reproducing information onto or from the optical disk laid on the disk tray in the B drive. In this situation, as shown in Fig. 12B, an operation state of the optical disk loaded in the B drive is displayed on the display device 5.

A transfer from the driven state of the B drive shown in Fig. 12B to a driven state of the D drive is triggered by a manual operation at the drive selecting switch 6 on the front panel 2. This manual operation is carried out when the B drive is in operation as shown in Fig. 12B. In response to the manual operation, the display device 5, which has been located on the right side of the opening 3 so far, is driven to move leftward along the openings 8 and 3 on the front panel 2, as shown in Fig. 12C. During a leftward transfer of the display device 5, the display device 5 provides a display state showing that the drives are under switching operation.

When the display device 5 finally arrives at a predetermined position in front of the leftward opening 3 as shown in Fig.12D (so that the leftward opening 3 is masked by the display device 5), the rightward opening 8 for the D drive appears at its left-side predetermined position. Through this opening 8, a disk tray 7 for the D drive is exposed to the external field, whereby the D drive becomes available. Hence, the disk tray 7 is pulled out forward to lay an optical disk in compliance with the standard for the D drive. This enables the optical disk to be loaded into the D drive.

That is, the optical disk placed on the disk tray 7 is then driven to be pulled back into the D drive, whereby the optical disk can be loaded into the D drive. Hence, it is possible that the optical disk is subjected to recording and reproducing bits of information.

In order to realize a transfer mechanism for moving the display device 5 shown in Figs. 12A to 12D, the guides 23 shown in the drive unit DV1 or DV2 according to the first or second embodiment can be used with some modifications. Namely, such guides 23 are placed on the front panel 2 to locate in parallel at the upper and lower ends of a lateral region along which the display device 5 transfers. Hence, along the guides 23, the display device 5 is transferred in the light and left (lateral) direction in each of Figs. 12A to 12B.

As described in the foregoing embodiments and modifications, an opening 8 or 3 other than an opening 3 or 8 for a disk in which an optical disk has been inserted and in operation is masked. It is therefore possible to provide a more polished design to the front panel 2. In addition, it is possible for users to quickly recognize which drive is in operation at present.

Moreover, the display device 5, which masks either the opening 3 or 8 for a drive in which an optical disk is yet to be loaded, indicates an operation state of an optical disk that has been loaded in a disk for operation. Thus, both of a displayed content on the display device 5 and an optical disk corresponding to the displayed content can easily be related to each other.

In particular, in the second embodiment and its modification, in cases where plural optical disks are concurrently in operation, the display device 5 is transferred to locate at a position that enables the display device 5 to prevent plural optical disks from being ejected. Thus it can be avoided that the optical disks in operation are erroneously ejected though the opening 3 or 8.

In addition, the foregoing embodiment and its modifications are not limited to be applied to optical disks, but may be applied to for example a tape-shaped recording medium.

Further, a program that corresponds to the flowchart shown in Fig. 5 or 11 can be stored in advance in an information recording medium, such as flexible disk or hard disk, or can previously be downloaded from a site through a communication network such as Internet and stored in various mediums. Such a medium with the program stored is applied to a universal microcomputer so that it reads the program for execution. Thus the microcomputer can be used instead of the foregoing CPU 40.

For the sake of completeness, it should be mentioned that the embodiments and modifications thereof explained so far are not definitive lists of possible embodiments of the present invention. The expert will appreciate that it is possible to combine the various construction details or to supplement or modify them by measures known from the prior art without departing from the basic inventive principle.

## Claims

1. An information processing apparatus (1, 50, 60) in which pluralities of openings (3, 8) are formed to allow an information recording medium to pass through each of the openings, **characterized in that** the apparatus comprising:
a display device (5) configured to display an operation state of the information processing apparatus and to be transferable in front of the plurality of openings; and
a transfer unit (6, 40, 41, 42, 30, 32) configured to control the display device so that the display device is transferred to a position at which the display device masks, of the plurality of openings, another opening other than a particular opening through which an information recording medium in operation is allowed to pass.

2. The information processing apparatus according to claim 1, **characterized in that** the display device is configured to display an operation state of the recording medium in operation in cases where the display device is transferred to the position at which the display device masks another opening.

3. The information processing apparatus according to either claim 1 or 2, **characterized in that** the transfer unit configured to control the transfer of the display device so that the display device is located at a position that prevents the recording medium from being ejected through a particular opening of the plurality of opening, the recording medium being loaded through the particular opening into the information processing apparatus and being in operation.

4. A method of controlling a transfer of a display device (5) equipped on an information processing apparatus (1, 50, 60) in which a plurality of openings (3, 8) are formed to allow a recording medium to pass through each opening when being loaded or unloaded into or from the information processing apparatus, information indicative of an operation state of the information processing apparatus being provided by the display device, **characterized in that** the method comprising the steps of:
detecting information showing that an information medium in operation is loaded through which opening;
detecting a current location of the display device; and
controlling, based on the detected information and the detected current location, the display device so that the display device is transferred to a position at which the display device masks, of the plurality of openings, another opening other than a particular opening through which an information recording medium in operation is allowed to pass.

5. An information processing program readable by a computer incorporated in an information processing apparatus (1, 50, 60) in which a plurality of openings (3, 8) are formed to allow a recording medium to pass through each opening when being loaded or unloaded into or from the information processing apparatus, information indicative of an operation state of the information processing apparatus being provided by a display device (5), wherein
the program makes the computer have a function of controlling the display device so that the display device is transferred to a position at which the display device masks, of the plurality of openings, another opening other than a particular opening through which an information recording medium in operation is allowed to pass.

6. An information recording medium in which a computer-readable program is recorded, the program being readable by a computer incorporated in an information processing apparatus (1, 50, 60) in which a plurality of openings (3, 8) formed to allow a recording medium to pass through each opening when being loaded or unloaded into or from the information processing apparatus, information indicative of an operation state of the information processing apparatus being provided by a display device (5), wherein
the program makes the computer have a function of controlling the display device so that the display device is transferred to a position at which the display device masks, of the plurality of openings, another opening other than a particular opening through which an information recording medium in operation is allowed to pass.
